# EUROPÄISCHE PATENTSCHRIFT

(11) **EP 4 305 315 B1**
(45) Veröffentlichungstag und Bekanntmachung des Hinweises auf die Patenterteilung: **25.02.2026**
(21) Anmeldenummer: 22710383.5
(22) Anmeldetag: 04.03.2022
(51) Int. Cl.: F04D 29/22

(54) **HERSTELLUNG EINES LAUFRADES IN EINEM HYBRIDVERFAHREN**
MANUFACTURE OF AN IMPELLER IN A HYBRID PROCESS
FABRICATION D'UNE ROUE À AUBES DANS UN PROCÉDÉ HYBRIDE

(30) Priorität: 09.03.2021 DE 102021105610
(43) Veröffentlichungstag der Anmeldung: 17.01.2024
(73) Patentinhaber: KSB SE & Co. KGaA, 67227 Frankenthal (DE)
(72) Erfinder: NOBEL, Tammuz, 67227 Frankenthal (DE)
(86) Internationale Anmeldenummer: PCT/EP2022/055537
(87) Internationale Veröffentlichungsnummer: WO 2022/189286

(56) Entgegenhaltungen:
- US-A1- 2015 017 013
- US-A1- 2017 260 997
- US-A1- 2019 313 878

## Beschreibung

Die Erfindung betrifft ein Laufrad für eine Kreiselpumpe mit einer Tragscheibe, an der Schaufeln angeordnet sind.

Ein Laufrad ist ein rotierendes und mit Schaufeln besetztes Bauteil einer Strömungsmaschine, beispielsweise einer Kreiselpumpe. Hier wird durch Strömungsumlenkung an den Schaufeln mechanische Leistung in Förderleistung umgesetzt.

Zur Aufnahme der Schaufeln besitzen alle Laufräder eine hintere Tragscheibe und bei geschlossenen Laufrädern auch eine vordere Deckscheibe. Bei einer anderen Betrachtungsweise verfügt ein Laufrad über eine innere und bei geschlossenem Laufrad auch über eine äußere Deckscheibe. Fehlt bei einem Laufrad die vordere oder äußere Deckscheibe, so gilt das Laufrad als offen.

In der DE 10 2016 225 018 A1 ist ein solches radiales Laufrad einer Kreiselpumpe exemplarisch beschrieben. Zwischen einer Tragscheibe und einer Deckscheibe sind Schaufeln angeordnet. Das Fluid strömt in axialer Richtung dem Laufrad zu, wird um 90 ° umgelenkt und tritt dann in radialer Richtung aus dem Laufrad aus.

Bei einer additiven Fertigung von Bauteilen wird das jeweilige Produkt Schicht für Schicht aus einem Aufbaumaterial aufgebaut, das auf eine Unterlage aufgebracht wird. Der Aufbauwerkstoff liegt meist in Pulverform vor. Der pulverförmige Werkstoff wird mittels Strahlung an den jeweiligen Stellen lokal vollständig aufgeschmolzen und bildet nach einer Erstarrung eine feste Materialschicht. Anschließend wird die Grundplatte, auf der sich der pulverförmige Werkstoff befindet, um den Betrag einer Schichtdicke abgesenkt und es wird erneut Pulver aufgetragen. Dieser Zyklus wird solange wiederholt, bis alle Schichten eines Bauteils hergestellt sind. Das fertige Bauteil wird vom überschüssigen Pulver gereinigt.

Die Daten zur Führung der Strahlung werden auf der Grundlage eines 3D-CAD-Körpers mittels einer Software erzeugt. Als Strahlung kann beispielsweise ein Laserstrahl zum Einsatz kommen. Alternativ zu einem selektiven Laserschmelzen kann auch ein Elektronenstrahl (EBM) zum Einsatz kommen.

Pro Schicht werden selektiv die Bereiche aufgeschmolzen, welche die Strukturen des Bauteils bilden. Um im nächsten Schritt die darunterliegende Schicht mit der darüber liegenden Schicht zu verbinden, schmilzt die Strahlung bis zu drei darunterliegende Schichten auf, die anschließend beim raschen Abkühlprozess mit der obersten Schicht fusionieren.

In der DE 10 2015 202 417 A1 ist ein strömungsführendes Bauteil, insbesondere ein radiales Laufrad, beschrieben, das durch aufeinanderfolgendes Verfestigen von Schichten mittels Strahlung hergestellt ist. Durch Variation der Strahlung werden Funktionsbereiche mit unterschiedlichen Eigenschaften erzeugt.

Die US 2017/260997 A1 beschreibt ein Verfahren zur Herstellung eines Laufrades aus einer Vielzahl von rohrförmigen Komponenten, wobei jede rohrförmige Komponente einen entsprechenden Strömungskanal des Laufrads bildet und einen Einlass und einen Auslass aufweist.

Die US 2019/313878 A1 zeigt ein Waschpumpenlaufrad mit einer Vielzahl von Schaufeln, die einstückig mit der Nabe ausgebildet sind, wobei sich die Schaufeln von der Nabe in einem Erstreckungswinkel relativ zu der Strömungsfläche der Nabe erstrecken, wobei der Erstreckungswinkel weniger als 60 Grad beträgt.

Bauteile, wie beispielsweise Laufräder, die mit einem additiven Verfahren hergestellt werden, sind in ihren Abmaßen sehr begrenzt. Bisher können nur Bauteile bis etwa dreißig Zentimeter hergestellt werden. Zudem ist die additive Herstellung für ein Bauteil, das in großen Stückzahlen hergestellt werden soll, im Vergleich zu herkömmlichen Verfahren teuer.

Aufgabe der Erfindung ist es ein Laufrad, auch ein großes Laufrad, für strömungsführende Bauteile zu erzeugen. Dabei sollte das Laufrad aus Segmenten, die durch unterschiedliche Herstellungsverfahren erzeugt wurden, zusammengefügt werden. Die Segmente sollen individuell hinsichtlich der Materialkombinationen, der Eigenschaften und der Materialdicke gestaltet werden können. Dieses Laufrad sollte einfach und kostengünstig realisiert werden können.

Diese Aufgabe wird erfindungsgemäß durch ein Laufrad für eine Kreiselpumpe und ein Verfahren zur Herstellung eines Laufrades gelöst. Bevorzugte Varianten sind den Unteransprüchen, der Beschreibung und den Zeichnungen zu entnehmen.

Erfindungsgemäß ist ein Laufrad für eine Kreiselpumpe mit einer Tragscheibe, an der Schaufeln angeordnet sind, als Hybridbauteil aus mindestens einer generativen Komponente und mindestens einer konventionellen Komponente aufgebaut, wobei mindestens eine Komponente in mindestens zwei Segmente aufgeteilt ist.

Eine generative Komponente ist mit einem generativen Fertigungsverfahren erzeugt worden. Die Bezeichnung generative Fertigungsverfahren umfasst alle Fertigungsverfahren, bei denen Material Schicht für Schicht aufgetragen und somit dreidimensionale Bauteile erzeugt werden. Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe für das "3D-Drucken" sind Kunststoffe, Kunstharze, Keramiken, Metalle, Carbon- und Graphitmaterialien.

Die Bezeichnung konventionelle Komponente bezeichnet eine Komponente, die mittels Urformen, Umformen oder einem subtraktiven Fertigungsverfahren erzeugt wird. Das Urformen ist eine Hauptgruppe von Fertigungsverfahren, bei denen aus einem formlosen Stoff ein fester Körper hergestellt wird, der eine geometrisch definierte Form hat. Urformen wird genutzt, um die Erstform eines festen Körpers herzustellen und den Stoffzusammenhalt zu schaffen. Beim Umformen werden Rohteile aus plastisch verformbaren Werkstoffen gezielt in eine andere Form gebracht werden, ohne dabei Material von den Rohteilen zu entfernen. Beim subtraktiven Fertigungsverfahren wird vom Werkstück etwas abgetrennt. Neben dem erzeugten Bauteil entstehen dabei vorwiegend Späne.

Gemäß der Erfindung werden die Schaufeln mit einem generativen Verfahren, vorzugsweise mittels selektivem Laserschmelzen mit einem Laser- oder einem Elektronenstrahl aus einem pulverförmigen Metall-Werkstoff erzeugt. In einer alternativen Ausführungsvariante der Erfindung können die Schaufeln auch aus schmelzfähigem Kunststoff durch Extrusion und Erhärtung erzeugt werden. Erfindungsgemäß ist auch die Erzeugung hybrider Schaufeln, bei denen auf einem Kunststoffgerüst mittels Kaltgasspritzen aufgebrachte, dünne Metallschichten aufgetragen sind.

Vorteilhafterweise verfügt das Laufrad über eine Deckscheibe. Ein Laufrad mit einer Deckscheibe wird als geschlossenes Laufrad einer Kreiselpumpe bezeichnet, das durch das Zusammenwirken mit einem Spaltring einen hervorragenden Wirkungsgrad bei einem äußerst kleinen Rückstrom aufweist.

Die Tragscheibe ist als konventionelle und/oder generative Komponente hergestellt. Vorzugsweise ist die Tragscheibe ein Gusserzeugnis. In einer alternativen Variante der Erfindung ist die Tragscheibe mittels selektivem Laserschmelzen vorzugsweise in Segmenten ausgebildet, die in einer integrativen Fertigungseinheit anschließend mit den Schaufeln in einem Fügeverfahren als Tragscheibe mit Schaufeln zusammengefügt wird.

Erfindungsgemäß ist die Deckscheibe als konventionelle Komponente ausgebildet, die vorzugsweise mittels eines Gussverfahrens hergestellt wird. Alternativ kann die Deckscheibe, insbesondere die Segmente der Deckscheibe, mittels eines spanenden Verfahrens, vorzugsweise mittels Fräsen, hergestellt werden. Idealerweise ist die Deckscheibe in mindestens zwei Segmente aufgeteilt. Dabei weist eine Komponente wie beispielsweise die Deckscheibe und/oder die Tragscheibe mehr als zwei, vorzugsweise mehr als drei, insbesondere mehr als 4, und/oder weniger als zehn, vorzugsweise weniger als neun, insbesondere weniger als acht, Segmente auf.

Erfindungsgemäß entspricht die Anzahl der Segmente der Anzahl der Schaufeln. Dabei weisen sowohl die Segmente als auch die Schaufeln eine radial nach außen gekrümmte Form auf. Insofern sind die Segmente als Teilstück zwischen zwei Schaufeln ausgebildet. Erfindungsgemäß verbindet eine Verbindungsfuge als Verbindungselement zwei Segmente und eine Schaufel. Im Ganzen ergibt sich daraus ein Laufrad für eine Kreiselpumpe, bei dem die Anzahl der Schaufeln der Anzahl der Verbindungsfugen entspricht. Die Verbindungsfugen werden vorzugsweise mit einem Fügeverfahren, insbesondere Schweißen, in einer integrativen Fertigungseinheit erzeugt.

Von besonders großem Vorteil ist die Fertigung auch von großen Laufrädern in einem integrativen, additiven Fertigungsverfahren. Durch den Einsatz eines besonders beweglichen Roboterarmes, der über unterschiedliche Werkzeuge der additiven Fertigung sowie auch der Fügetechnik verfügt, können besonders komplexe und auch große Laufräder gefertigt werden. Beispielsweise können mit dem Werkzeug des selektiven Laserschmelzens die Schaufeln erzeugt werden, mit einem Fixierungswerkzeug die Positionierung der konventionellen Komponenten mit den Schaufeln ausgeführt werden und die Verbindungsfugen mit dem Schweißwerkzeug gebildet werden.

Beim Fügen werden zwei oder mehr feste Körper, die Fügeteile, mit geometrisch bestimmter Gestalt dauerhaft verbunden. Beim Schweißen entsteht eine unlösbare Verbindung von Segmenten und einer Schaufel unter Anwendung von Wärme und/oder Druck, mit oder ohne Schweißzusatzwerkstoffe. Die Zusatzwerkstoffe werden üblicherweise in Form von Stäben oder Drähten zugeführt, abgeschmolzen und erstarren in der Fuge zwischen den Fügepartnern, um so die Verbindung zu erzeugen. Das Schweißen zählt zu den stoffschlüssigen Verbindungsmethoden, wobei Verbindungen mit hoher Festigkeit erzeugt werden.

In einer alternativen Variante der Erfindung könnte als Fügeverfahren das Pressen eingesetzt werden. Dabei bewirken große Kräfte das Ausbilden einer dauerhaften Verbindung zwischen den Segmenten und der Schaufel.

Vorteilhafterweise verbindet die Verbindungsfuge die Segmente einer Komponente und die Schaufeln nahezu spaltfrei. Dabei beträgt der Spalt weniger als 10 µm, vorzugsweise weniger als 7,5 µm, insbesondere weniger als 5 µm. Idealerweise entsteht somit ein Laufrad aus vielen Einzelteilen, dass keine strömungstechnischen Nachteile gegenüber einem durch Urformen erzeugten Laufrad aufweist. Von besonders großem Vorteil ist die Erzeugung von Laufradgeometrien, die mit konventionellen Fertigungsverfahren nicht oder nur schwer erzeugt werden können. Dadurch lassen sich auch große Laufräder mit besseren hydraulischen Wirkungsgraden durch die Fertigung als hybrides Bauteil erzeugen.

Erfindungsgemäß weisen die Schaufeln Auflagepunkte für die Segmente auf, wodurch sich das spaltfreie Fügen erst realisieren lässt. Eine feste und sichere Auflage ist für das Fügeverfahren zur Erzeugung der Verbindungsfuge zwischen den Segmenten und der Schaufel eine wichtige Voraussetzung.

Dazu sind die Fügeflächen der Segmente und der Schaufel zur Ausbildung der Verbindungsfuge erfindungsgemäß abgerundet und/oder abgeschrägt ausgebildet. Die Anordnung vor dem Fügen ergibt sich dabei nahezu spaltfrei und ist sicher gegen ein Verrutschen in der integrativen Fertigungseinheit positioniert.

In einer alternativen Variante der Erfindung kann an der Schaufel ein Anschlag und/oder eine Auflagenut ausgebildet sein, um die Segmente für das Fügeverfahren zu positionieren.

Gemäß der Erfindung besteht das Verfahren zur Herstellung eines Laufrades mittels einer integrativen Fertigungseinheit aus dem Ausbilden der Segmente einer Deckscheibe und/oder der Segmente einer Tragscheibe durch Urformen und/oder Zerspanen, dem Ausbilden der Schaufeln durch ein generatives Verfahren und dem Fügen der Schaufeln sowie der Segmente zu einem hybriden Laufrad.

Das erfindungsgemäße Verfahren zeichnet sich durch besonders individuell gestaltbare Segmente und/oder Schaufeln aus. Dabei können Anpassungen des Laufrads je nach Anforderungen der Kreiselpumpe durch die generative Fertigung berücksichtigt werden. Die teure Einzelanfertigung wird durch die vergleichsweise günstigen, segmentierten, konventionell gefertigten Komponenten und den Fügeprozess deutlich preiswerter. Zudem können die generativ gefertigten Komponenten eine Form aufweisen, die einen höheren Pumpenwirkungsgrad erzielen kann und bisher nicht auf konventionelle Fertigungsweise erreicht werden konnte.

Idealerweise verwendet man das Laufrad, das als hybrides Bauteil aus mindestens einer generativen Komponente und mindestens einer konventionellen Komponente erzeugt wird, als Laufrad für eine Kreiselpumpe. Dabei zeichnet sich das Laufrad durch hervorragende strömungsmechanische Eigenschaften aus und kann eine Größe aufweisen, die mit den bekannten generativen Fertigungseinheiten nicht erzeugt werden kann.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: eine Draufsicht eines Laufrades,
- Fig. 2: eine Draufsicht auf ein Laufrad ohne Deckscheibe,
- Fig. 3: eine perspektivische Darstellung zweier Segmente und einer Schaufel.

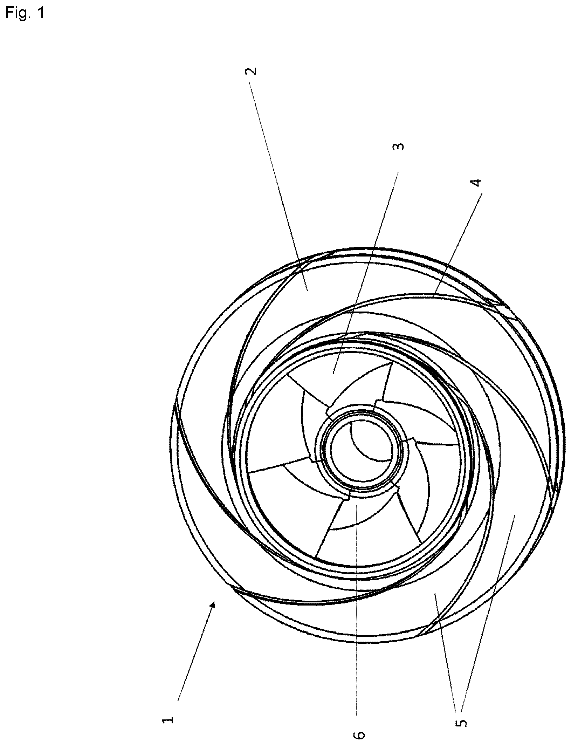

Fig. 1 zeigt eine Draufsicht auf ein geschlossenes, radiales Laufrad 1. Die Deckscheibe 2 ist aus Segmenten 5 mit Verbindungsfugen 4 zusammengefügt. Vorzugsweise ist die Verbindungsfuge 4 eine Schweißnaht. Die Schaufeln 3 sind zwischen der Deckscheibe 2 und der Tragscheibe 6 angeordnet.

Die Form eines Segments 5 ist als Teilstück zwischen zwei Schaufeln 3 ausgebildet. Dabei weisen die Verbindungsfugen 4, die Seitenkanten der Segmente 5 und die Schaufeln 3 eine nach außen gekrümmte Form auf.

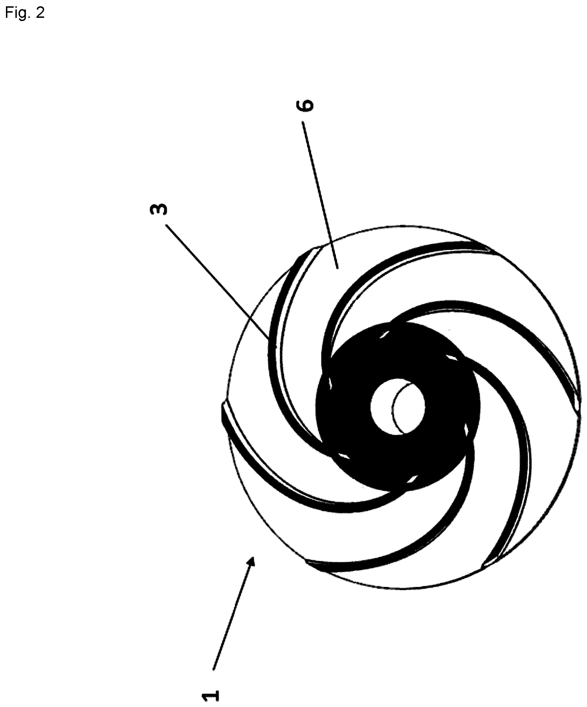

Fig. 2 zeigt eine Draufsicht auf ein Laufrad 1 ohne Deckscheibe. Die Schaufeln 3 sind an der Tragscheibe 6 angeordnet. Die Schaufeln 3 weisen eine nach außen gekrümmte Form auf.

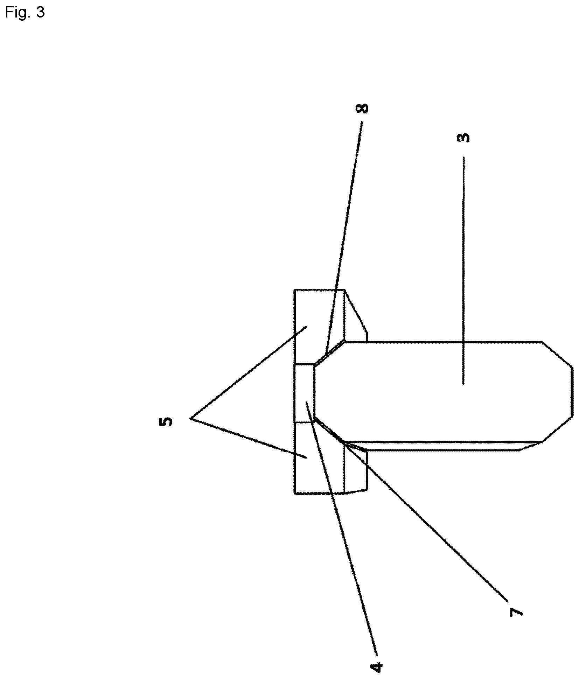

Fig. 3 zeigt eine perspektivische Darstellung zweier Segmente 5 und einer Schaufel 3. Die Segmente 5 und die Schaufel 3 sind mit einer Verbindungsfuge 4 zusammengefügt. Die Verbindungsfuge 4 ist in diesem Ausführungsbeispiel als Schweißfuge ausgebildet, die vorzugsweise von einer integrativen Fertigungseinheit ausgeführt ist. Die Verbindungsfuge 4 verbindet die Segmente 5 und die Schaufel 3 nahezu spaltfrei. Der Spalt 7 beträgt dabei weniger als 10 µm, vorzugsweise weniger als 7,5 µm, insbesondere weniger als 5 µm. Die Fügeflächen 8 der Segmente 5 und der Schaufel 3 zur Ausbildung der Verbindungsfuge 4 sind in diesem Ausführungsbeispiel mit einer Rundung ausgebildet, so dass die Auflage für den Fügeprozess optimal ausgestaltet ist. In einer anderen Ausführungsvariante sind auch schräge oder kantige Fügeflächen denkbar.

## Patentansprüche

1. Laufrad (1) für eine Kreiselpumpe mit einer Tragscheibe (6), an der Schaufeln (3) angeordnet sind,
**dadurch gekennzeichnet, dass**
das Laufrad (1) als Hybridbauteil aus mindestens einer generativen Komponente und mindestens einer konventionellen Komponente aufgebaut ist, wobei mindestens eine Komponente in mindestens zwei Segmente (5) aufgeteilt ist, wobei die Anzahl der Segmente (5) der Anzahl der Schaufeln (3) entspricht, wobei sowohl die Segmente (5) als auch die Schaufeln (3) eine radial nach außen gekrümmte Form aufweisen, wobei die Form eines Segments (5) als Teilstück zwischen zwei Schaufeln (3) ausgebildet ist, wobei eine Verbindungsfuge (4) als Verbindungselement zwischen zwei Segmenten (5) und einer Schaufel (3) ausgebildet ist, wobei die Schaufeln (3) Auflagepunkte für die Segmente (5) aufweisen und die Fügeflächen (8) der Segmente (5) und der Schaufeln (3) zur Ausbildung der Verbindungsfuge (4) abgerundet und/oder abgeschrägt ausgebildet sind.

2. Laufrad (1) nach Anspruch 1, **dadurch gekennzeichnet, dass** die Schaufeln (3) generativ aufgebaut sind.

3. Laufrad (1) nach Anspruch 1 oder 2, **dadurch gekennzeichnet, dass** das Laufrad eine Deckscheibe (2) aufweist.

4. Laufrad (1) nach Anspruch 3, **dadurch gekennzeichnet, dass** die Deckscheibe (2) als konventionelle Komponente ausgebildet ist.

5. Laufrad (1) nach einem der Ansprüche 1 bis 4, **dadurch gekennzeichnet, dass** die Tragscheibe (6) konventionell und/oder generativ ausgebildet ist.

6. Laufrad (1) nach einem der Ansprüche 1 bis 5, **dadurch gekennzeichnet, dass** eine Komponente mehr als zwei, vorzugsweise mehr als drei, insbesondere mehr als vier, und/oder weniger als zehn, vorzugsweise weniger als neun, insbesondere weniger als acht, Segmente (5) aufweist.

7. Laufrad (1) nach einem der Ansprüche 1 bis 6, **dadurch gekennzeichnet, dass** die Verbindungsfuge (4) die Segmente (5) und die Schaufel (3) nahezu spaltfrei verbindet.

8. Laufrad (1) nach Anspruch 7, **dadurch gekennzeichnet, dass** der Spalt (7) weniger als 10 µm, vorzugsweise weniger als 7,5 µm, insbesondere weniger als 5 µm, beträgt.

9. Verfahren zur Herstellung eines Laufrades (1) mittels einer integrativen Fertigungseinheit, gemäß den Ansprüchen 1 bis 8, mit folgenden Schritten:
• Ausbilden der Segmente (5) einer Deckscheibe (2) und/oder einer Tragscheibe (6) durch Urformen und/oder Zerspanen,
• Ausbilden der Schaufeln (3) durch ein generatives Verfahren,
• Fügen der Schaufeln (3) und der Segmente (5) zu einem hybrid erzeugten Laufrad.

10. Verwendung eines hybriden Bauteils gemäß den Ansprüchen 1 bis 8 für eine Kreiselpumpe.

## Claims

1. Impeller (1) for a centrifugal pump, with a rear shroud (6) on which blades (3) are arranged,
**characterized in that**
the impeller (1) has been constructed as a hybrid component from at least one generative component and at least one conventional component, wherein at least one component has been subdivided into at least two segments (5), wherein the number of segments (5) corresponds to the number of blades (3), wherein both the segments (5) and the blades (3) exhibit a shape that is curved radially outwards, wherein the shape of a segment (5) takes the form of a constituent part between two blades (3), wherein a connecting joint (4) takes the form of a connecting element between two segments (5) and a blade (3), wherein the blades (3) exhibit points of support for the segments (5) and the joining surfaces (8) of the segments (5) and of the blades (3) have been rounded and/or bevelled for the purpose of forming the connecting joint (4).

2. Impeller (1) according to Claim 1, **characterized in that** the blades (3) have been constructed generatively.

3. Impeller (1) according to Claim 1 or 2, **characterized in that** the impeller exhibits a front shroud (2).

4. Impeller (1) according to Claim 3, **characterized in that** the front shroud (2) takes the form of a conventional component.

5. Impeller (1) according to one of Claims 1 to 4, **characterized in that** the rear shroud (6) has been formed conventionally and/or generatively.

6. Impeller (1) according to one of Claims 1 to 5, **characterized in that** a component exhibits more than two segments (5), preferably more than three, in particular more than four, and/or fewer than ten, preferably fewer than nine, in particular fewer than eight.

7. Impeller (1) according to one of Claims 1 to 6, **characterized in that** the connecting joint (4) connects the segments (5) and the blade (3) in an almost gap-free manner.

8. Impeller (1) according to Claim 7, **characterized in that** the gap (7) amounts to less than 10 µm, preferably less than 7.5 µm, in particular less than 5 µm.

9. Method for producing an impeller (1) according to Claims 1 to 8 by means of an integrative manufacturing unit, with the following steps:
• forming the segments (5) of a front shroud (2) and/or of a rear shroud (6) by primary shaping and/or machining,
• forming the blades (3) by a generative method,
• joining the blades (3) and the segments (5) to form a hybrid impeller.

10. Use of a hybrid component according to Claims 1 to 8 for a centrifugal pump.

## Revendications

1. Roue à aubes (1) pour une pompe centrifuge, avec un disque de support (6), sur lequel sont disposées des aubes (3),
caractérisée en ce
la roue à aubes (1) est construite sous la forme d'un composant hybride constitué d'au moins un composant génératif et d'au moins un composant classique, au moins un composant étant divisé en au moins deux segments (5), le nombre des segments (5) correspondant au nombre des aubes (3), tant les segments (5) que les aubes (3) présentant une forme incurvée radialement vers l'extérieur, la forme d'un segment (5) étant formée comme une pièce partielle entre deux aubes (3), un joint de raccordement (4) étant formé comme un élément de raccordement entre deux segments (5) et une aube (3), les aubes (3) comportant des points d'appui pour les segments (5) et les surfaces d'assemblage (8) des segments (5) et des aubes (3) étant arrondies et/ou biseautées pour former le joint de raccordement (4).

2. Roue à aubes (1) selon la revendication 1, **caractérisée en ce que** les aubes (3) sont de construction générative.

3. Roue à aubes (1) selon la revendication 1 ou 2, **caractérisée en ce que** la roue à aubes comporte un disque de recouvrement (2).

4. Roue à aubes (1) selon la revendication 3, **caractérisée en ce que** le disque de recouvrement (2) est formé sous la forme d'un composant classique.

5. Roue à aubes (1) selon l'une des revendications 1 à 4, **caractérisée en ce que** le disque de support (6) est formé de manière classique et/ou générative.

6. Roue à aubes (1) selon l'une des revendications 1 à 5, **caractérisé en ce qu'**un composant comporte plus de deux, de préférence plus de trois, en particulier plus de quatre, et/ou moins de dix, de préférence moins de neuf, en particulier moins de huit, segments (5).

7. Roue à aubes (1) selon l'une des revendications 1 à 6, **caractérisée en ce que** le joint de raccordement (4) raccorde les segments (5) et l'aube (3) quasiment sans intervalle.

8. Roue à aubes (1) selon la revendication 7, **caractérisée en ce que** l'intervalle (7) est inférieur à 10 µm, de préférence inférieur à 7,5 µm, en particulier inférieur à 5 µm.

9. Procédé de fabrication d'une roue à aubes (1) au moyen d'une unité de production intégrée selon les revendications 1 à 8, avec des étapes suivantes :
• formation des segments (5) d'un disque de recouvrement (2) et/ou d'un disque de support (6) par moulage principal et/ou usinage par enlèvement de copeaux,
• formation des aubes (3) par un procédé génératif,
• assemblage des aubes (3) et des segments (5) en une roue à aubes produite de manière hybride.

10. Utilisation d'un composant hybride selon les revendications 1 à 8 pour une pompe centrifuge.
